# EUROPEAN PATENT APPLICATION

(11) **EP 4 411 922 A1**
(43) Date of publication of application: **07.08.2024**
(21) Application number: 22876076.5
(22) Date of filing: 22.09.2022
(51) Int. Cl.: H01M 10/0562, C01B 25/14, H01B 1/06, H01B 1/10, H01B 13/00, H01M 4/62, H01M 10/052

(54) **SULFIDE SOLID ELECTROLYTE AND METHOD FOR MANUFACTURING SAME**

(30) Priority: 30.09.2021 JP 2021162226
(71) Applicant: AGC INC., Chiyoda-ku, Tokyo 1008405 (JP)
(72) Inventor: FUJII, Naoki, Tokyo 100-8405 (JP); MAEDA, Naoki, Tokyo 100-8405 (JP); HOMMA, Osamu, Tokyo 100-8405 (JP); AKATSUKA, Kosho, Tokyo 100-8405 (JP)
(74) Representative: Müller-Boré & Partner Patentanwälte PartG mbB
(86) International application number: PCT/JP2022/035542
(87) International publication number: WO 2023/054209

(57) **Abstract**

The present invention relates to a sulfide solid electrolyte used for a lithium ion secondary battery, containing an argyrodite type crystal phase that contains Li, P, S, and Ha, where [Ha]/[P] (atomic ratio) is 1.3 or greater, and in a ³⁵Cl-NMR spectrum measured under specific conditions, S_{B}/S_{A} using an area intensity S_{A} of a peak observed at 0 to 30 ppm and an area intensity S_{B} of a peak observed at -150 to 0 ppm is 3.5 or greater, or a peak is observed at -150 to 0 ppm and a peak is not observed at 0 to 30 ppm.

## Description

### TECHNICAL FIELD

The present invention relates to a sulfide solid electrolyte to be used for a lithium-ion secondary battery and a method for producing the same.

### BACKGROUND ART

Lithium-ion secondary batteries are widely used for a portable electronic device such as a mobile phone and a notebook computer.

In the related art, a liquid electrolyte has been used in a lithium-ion secondary battery, but there is a concern of liquid leakage, ignition, and the like, and it has been necessary to increase the size of a case for safety design. The lithium-ion secondary batteries have also been desired to be improved in terms of short battery life and narrow operating temperature range.

On the other hand, attention has been paid to an all-solid-state lithium-ion secondary battery in which a solid electrolyte is used as an electrolyte of a lithium-ion secondary battery, from the viewpoint of improving safety, charging and discharging at a high speed, and reducing the size of a case.

The solid electrolytes are roughly classified into sulfide solid electrolytes and oxide solid electrolytes. Sulfide ions constituting the sulfide solid electrolytes have higher polarizability and higher lithium ion conductivity than those of oxide ions constituting the oxide solid electrolytes. As the sulfide solid electrolytes, LGPS crystals such as Li₁₀GeP₂S₁₂, argyrodite crystals such as Li₆PS₅Cl, LPS crystallized glass such as Li₇P₃S₁₁ crystallized glass, and the like have been known.

Patent Literature 1 discloses an argyrodite sulfide solid electrolyte. The sulfide solid electrolyte disclosed in Patent Literature 1 has a cubic crystal structure belonging to a space group F-43m, and includes a compound represented by a composition formula: Li₇₋ₓPS_{6-X}Ha_{X} (where Ha represents Cl or Br) (where x = 0.2 to 1.8), and a lightness L value of an L* a* b* color system is 60.0 or more. This is intended to improve the charge and discharge efficiency and the cycle characteristics by increasing the lithium ion conductivity and decreasing the electron conductivity.

In an argyrodite crystal structure, a Cl element occupying a 4d site is related to an energy barrier accompanying the movement of lithium ions, and affects the frequency of lithium ions jumping to adjacent sites. That is, the Cl element is an important factor for achieving a high lithium ion conductivity. Non-Patent Literature 1 discloses a method of increasing the amount of halogen elements occupying a 4d site by increasing a proportion of the halogen elements in a composition of an argyrodite crystal structure.

### CITATION LIST

### PATENT LITERATURE

Patent Literature 1: WO2015/012042

### NON-PATENT LITERATURE

Non-Patent Literature 1: Xuyong Feng et al. Energy Storage Materials 30 (2020) 67-73.

### SUMMARY OF INVENTION

### TECHNICAL PROBLEM

However, there is no known method of increasing the amount of Cl elements occupying a 4d site in an argyrodite crystal structure, except that a composition having a high proportion of halogen elements is adopted.

In addition, in order to achieve a high lithium ion conductivity, argyrodite sulfide solid electrolytes in the related art have to be made into a pressure-molded product at a high pressure of about 300 MPa to 600 MPa, or a hot press molded product by pressurizing while heating. However, even if a high lithium ion conductivity can be achieved by the method, it is not realistic to pressure-mold a wide area at a high pressure on the assumption of use as an actual battery.

In view of the above, an object of the present invention is to provide a sulfide solid electrolyte to be used for a lithium-ion secondary battery that exhibits a high lithium ion conductivity in a pressure-molded product at a low pressure even in the case where an element ratio of a halogen element in an argyrodite crystal phase is not as high as that in the related art, and a method for producing the same.

### SOLUTION TO PROBLEM

As a result of intensive studies, the present inventors have found that the problems can be solved when an argyrodite crystal phase satisfies a certain condition in a ³⁵Cl-NMR spectrum, and have completed the present invention. In addition, the present inventors have found a producing method through a homogeneous intermediate as one method for obtaining such an argyrodite crystal phase. The homogeneous intermediate refers to an intermediate obtained by reacting raw materials and, an intermediate in which a structure thereof becomes, for example, amorphous or melted into a molten solution.

That is, the present invention relates to the following [1] to [13].
[1] A sulfide solid electrolyte to be used for a lithium-ion secondary battery, the sulfide solid electrolyte including:
   an argyrodite crystal phase including Li, P, S, and Ha, in which
   the Ha is one or more halogen elements including at least Cl,
   a content ratio represented by [Ha]/[P] (atomic ratio) is 1.3 or more, where [P] is a content of the P and [Ha] is a total content of the Ha,
   in a ³⁵Cl-NMR spectrum,
   an area intensity ratio represented by S_{B}/S_{A} is 3.5 or more, where S_{A} is an area intensity of a peak observed at 0 ppm to 30 ppm and S_{B} is an area intensity of a peak observed at -150 ppm to 0 ppm, or
   a peak is observed at -150 ppm to 0 ppm and no peak is observed at 0 ppm to 30 ppm, and
      the ³⁵Cl-NMR spectrum is measured under the following conditions:
   measurement is made using LiCl as an external standard, a chemical shift position having a highest intensity in an obtained ³⁵Cl-NMR spectrum is set to 9.93 ppm; and a ³⁵Cl-NMR measurement is made to obtain the ³⁵Cl-NMR spectrum under conditions of a probe: a probe for 3.2 mm solid, a measurement condition: a single pulse method, a pulse width: 2.45 µs, an observation center: 20 ppm, an observation width: 1000 ppm, a relaxation delay: 10 sec, a cumulative number: 1024, and a rotation speed: 15 kHz.
[2] The sulfide solid electrolyte according to [1], in which the Ha is two or more halogen elements including Cl.
[3] The sulfide solid electrolyte according to [1] or [2], in which the Ha is two or more halogen elements including Cl and Br.
[4] The sulfide solid electrolyte according to [3], in which a content ratio represented by [Cl]/[Br] (atomic ratio) is 0.2 to 3.0, where [Cl] is a content of Cl and [Br] is a content of Br.
[5] The sulfide solid electrolyte according to any one of [1] to [4], in which when the argyrodite crystal phase is represented by LiₐPS_{b}Ha_{c}, element ratios represented by a, b, and c satisfy relationships of 5 ≤ a ≤ 7, 4 ≤ b ≤ 6, and 1.3 ≤ c ≤ 2.
[6] The sulfide solid electrolyte according to any one of [1] to [5], in which a crystal structure of the argyrodite crystal phase includes an anion,
   the anion includes an oxide anion having an M-O bond in which M and O are bonded, and
   the M is at least one element selected from the group consisting of a metal element and a metalloid element in groups 2 to 14 of a periodic table.
[7] The sulfide solid electrolyte according to [6], in which a total content of the elements of Li, P, S, Ha, M, and O is 90 mass% or more.
[8] A method for producing a sulfide solid electrolyte to be used for a lithium-ion secondary battery, the method including:
   mixing raw materials including Li, P, S, and Ha to obtain a raw material mixture;
   heating the raw material mixture to obtain a molten material as a homogeneous intermediate compound; and
   cooling the molten material to precipitate an argyrodite crystal, in which
   the Ha is one or more halogen elements including at least Cl, and
   the sulfide solid electrolyte includes an argyrodite crystal phase.
[9] The method for producing a sulfide solid electrolyte according to [8], in which the heating is performed under an inert atmosphere at 600°C to 800°C for 5 minutes or longer.
[10] A method for producing a sulfide solid electrolyte to be used for a lithium-ion secondary battery, the method including:
   mixing raw materials including Li, P, S, and Ha to obtain an amorphous intermediate compound; and
   heating and sintering the intermediate compound to precipitate an argyrodite crystal, in which
   the Ha is one or more halogen elements including at least Cl, and
   the sulfide solid electrolyte includes an argyrodite crystal phase.
[11] The method for producing a sulfide solid electrolyte according to [10], in which a peak derived from the raw materials is not observed in a Raman spectrum of the intermediate compound.
[12] The method for producing a sulfide solid electrolyte according to [10] or [11], in which the mixing is performed at a rotation speed of 400 rpm or more for 12 hours or longer in an environment with a dew point of -60°C or higher by a mechanical milling method using a ball mill.
[13] The method for producing a sulfide solid electrolyte according to any one of [10] to [12], in which the intermediate compound has a particle diameter of 0.1 µm to 2 µm.

### ADVANTAGEOUS EFFECTS OF INVENTION

According to the sulfide solid electrolyte of the present invention, a high lithium ion conductivity can be achieved in a pressure-molded product at a low pressure even in the case where an element ratio of the halogen element in the argyrodite crystal phase is lower than that in the related art. Therefore, the sulfide solid electrolyte is very useful as a solid electrolyte for a lithium-ion secondary battery, and accordingly, it is expected to improve the battery characteristics of the lithium-ion secondary battery.

### BRIEF DESCRIPTION OF DRAWINGS

[FIG. 1] FIG. 1 shows a ³⁵Cl-NMR spectrum of a sulfide solid electrolyte of Example 9, and shows a diagram for explaining how to determine an area intensity ratio represented by S_{B}/S_{A}.
[FIG. 2] FIG. 2 shows ³⁵Cl-NMR spectra of sulfide solid electrolytes of Examples 1, 2, 5, and 9.

### DESCRIPTION OF EMBODIMENTS

Hereinafter, the present invention will be described in detail, but the present invention is not limited to the following embodiments, and can be freely modified and implemented without departing from the gist of the present invention. In addition, the symbol "-" or the word "to" that is used to express a numerical range includes the numerical values before and after the symbol or the word as the upper limit value and the lower limit value of the range, respectively.

### <Sulfide Solid Electrolyte>

A sulfide solid electrolyte according to the present embodiment (hereinafter, may be simply referred to as a "solid electrolyte") is used for a lithium-ion secondary battery and includes an argyrodite crystal phase including Li, P, S, and Ha. The Ha is one or more halogen elements including at least Cl.

### (Argyrodite Crystal Phase)

In the argyrodite crystal phase, a content ratio represented by [Ha]/[P] (atomic ratio) is 1.3 or more, where [P] is a content of the P and [Ha] is a total content of the Ha. That is, when the argyrodite crystal phase is represented by LiₐPS_{b}Ha_{c}, a total element ratio of the halogen elements represented by c is 1.3 or more.

In a ³⁵Cl-NMR spectrum of the solid electrolyte measured under the following conditions, peaks are observed at 0 ppm to 30 ppm and -150 ppm to 0 ppm, or a peak is observed at -150 ppm to 0 ppm but no peak is observed at 0 ppm to 30 ppm.

In the case where the peaks are observed at 0 ppm to 30 ppm and -150 ppm to 0 ppm, an area intensity ratio represented by S_{B}/S_{A} is 3.5 or more, where S_{A} is an area intensity of a peak observed at 0 ppm to 30 ppm and S_{B} is an area intensity of a peak observed at -150 ppm to 0 ppm.

Although a sharp peak may be detected in a range of -50 ppm to 0 ppm, this is treated as a part of S_{B}.

### (Conditions)

Measurement is made using LiCl as an external standard, a chemical shift position having a highest intensity in an obtained ³⁵Cl-NMR spectrum is set to 9.93 ppm; and a ³⁵Cl-NMR measurement is made to obtain the ³⁵Cl-NMR spectrum under conditions of a probe: a probe for 3.2 mm solid, a measurement condition: a single pulse method, a pulse width: 2.45 µs, an observation center: 20 ppm, an observation width: 1000 ppm, a relaxation delay: 10 sec, a cumulative number: 1024, and a rotation speed: 15 kHz.

The ³⁵Cl-NMR spectrum measured under the above conditions is analyzed using software "ALICE2 FOR WINDOWS (registered trademark) Ver. 6" to determine the area intensity S_{A} of the peak observed at 0 ppm to 30 ppm and the area intensity S_{B} of the peak observed at -150 ppm to 0 ppm.

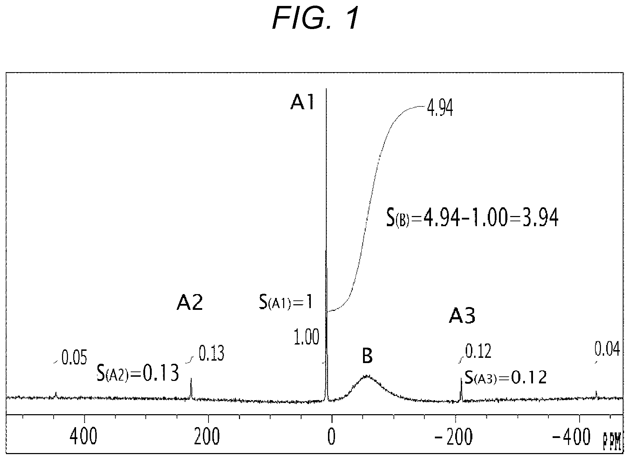

A method for calculating the area intensity S_{A} and the area intensity S_{B} will be described using a ³⁵Cl-NMR spectrum of Example 9 shown in FIG. 1.

In FIG. 1, in a range of 0 ppm to 30 ppm, a peak A1 with a peak top near 9.5 ppm is observed. As a spinning side band of the peak A1, a peak A2 with a peak top near 228 ppm and a peak A3 with a peak top near - 208 ppm are observed.

Here, assuming that an area intensity of the peak A1 is 1, a total area intensity of the peak A1, the peak A2, and the peak A3 is defined as the area intensity S_{A}. In determining the area intensity, an integration range of the peak A1 has been set to 0 ppm to 20 ppm, an integration range of the peak A2 has been set to 220 ppm to 240 ppm, and an integration range of the peak A3 has been set to -220 ppm to -200 ppm. A spinning side band derived from the peak A1 has been also observed near ±450 ppm, but the spinning side band has not been included in the calculation of area intensity because the spinning side band is weak.

Next, in FIG. 1, in a range of -150 ppm to 0 ppm, a peak B with a peak top near -60 ppm is observed. Therefore, an area intensity of the peak B is determined using an integration range of -160 ppm to 20 ppm, and a value obtained by subtracting the area intensity of the peak A having an overlapping integration range from the area intensity of the peak B is defined as the area intensity S_{B} of the peak B.

From the area intensity S_{A} and the area intensity S_{B} obtained as described above, an area intensity ratio represented by S_{B}/S_{A} is determined.

In addition to the above, the present inventors have determined a ³⁵Cl-NMR spectrum for an argyrodite crystal from the first principle calculation as described below. In the first principle calculation, a density functional method was used.

As a unit cell, an initial structure was set for Li₂₂P₄S₁₈Cl₃Br₃ in which one Cl atom and two Br atoms are located at a 4a site, and two Cl atoms and one Br atom are located at a 4d site. In addition, as a unit cell, an initial structure was set for Li₂₂P₄S₁₈Cl₆ in which two Cl atoms are located at a 4a site and four Cl atoms are located at a 4d site. After structural optimization using VASP, NMR calculation was performed.

When the ³⁵Cl-NMR spectrum was determined from the first principle calculation in this manner, it has been found that in an argyrodite crystal structure, a peak at the 4a site is located on a lower magnetic field side, that is, on a side with a higher ppm value, compared to a peak at the 4d site.

From these results, it is considered that when the area intensity ratio represented by S_{B}/S_{A} is large, the amount of Cl located at the 4a site becomes relatively small. This means that a proportion of chlorine (Cl) at the 4d site surrounded by lithium (Li) increases.

The 4d site is composed of an anion represented by S²⁻ or Ha⁻, and S²⁻ has a higher valence than Ha⁻ and easily binds Li⁺. As a result, a lithium ion conductivity decreases.

On the other hand, in the sulfide solid electrolyte according to the present embodiment, Ha including Cl with a lower valence occupies the 4d site in a relatively large amount, and thus an interaction with Li⁺ decreases, and Li⁺ easily moves. As a result, it is considered that the lithium ion conductivity increases.

In addition to the above, as a result of the first principle calculation, it has been found that an elastic modulus is estimated to be lower when the amount of Cl located at the 4a site is relatively small. This means that even when pressure molding is performed under a lower pressure, an interfacial contact property is good and an interface resistance is reduced. That is, the sulfide solid electrolyte according to the present embodiment can achieve a high lithium ion conductivity even as a pressure-molded product formed at a low pressure of about 50 MPa to 100 MPa.

In the case where the sulfide solid electrolyte includes a halogen element other than Cl as the Ha, when the amount of the halogen element located at the 4a site is relatively small, the elastic modulus is low, and a high lithium ion conductivity can be achieved even as a pressure-molded product formed at a low pressure.

For example, in the case where the sulfide solid electrolyte includes Br as a halogen element other than Cl, when ⁷⁹Br-NMR is measured, it is considered that the same consideration as the ³⁵Cl-NMR spectrum is possible.

A comparison will be made between the argyrodite crystal phase in the present embodiment and a method of increasing the halogen element occupying the 4d site by increasing a proportion of the halogen element in the composition of the argyrodite crystal structure in the related art.

Referring to Non-Patent Literature 1, the general formula of the argyrodite crystal is expressed as Li₆₋ₓPS₅₋ₓCl_{1 + x}. In the related art, by increasing the proportion of the halogen element, the proportion of the halogen element occupying the 4d site with respect to a sulfur element is increased to increase a lithium ion conductivity. The expression of increasing the proportion of the halogen element means increasing a content ratio of the halogen represented by [Ha]/[P] (atomic ratio), that is, increasing the proportion of the halogen element with respect to the sulfur element. According to Non-Patent Literature 1, as the content ratio of the halogen represented by [Ha]/[P] (atomic ratio) increases, the area intensity ratio represented by S_{B}/S_{A} tends to decrease.

On the other hand, even if the sulfide solid electrolyte according to the present embodiment has a composition with a large content ratio represented by [Ha]/[P] (atomic ratio), the area intensity ratio represented by S_{B}/S_{A} can be increased, specifically, the area intensity ratio satisfies 3.5 or more. When the area intensity ratio is 3.5 or more, a high lithium ion conductivity is achieved even in a pressure-molded product formed at a low pressure even in the case where the content ratio represented by [Ha]/[P] (atomic ratio) is not as large as that in the related art.

Thus, the area intensity ratio represented by S_{B}/S_{A} is 3.5 or more, and is preferably 4 or more, more preferably 5 or more, still more preferably 10 or more, and particularly preferably 30 or more from the viewpoint of obtaining a higher lithium ion conductivity. An upper limit of S_{B}/S_{A} is not particularly limited, and is preferably as high as possible.

In addition, in the ³⁵Cl-NMR spectrum of the solid electrolyte according to the present embodiment, a peak is observed at -150 ppm to 0 ppm, and no peak may be observed at 0 ppm to 30 ppm. This means that Cl located at the 4a site may be 0, that is, Cl may not exist, and the area intensity ratio represented by S_{B}/S_{A} becomes infinite.

In addition to the characteristics of the ³⁵Cl-NMR spectrum, in the argyrodite crystal phase, the content ratio represented by [Ha]/[P] (atomic ratio) is 1.3 or more, where [P] is a content of the P and [Ha] is a total content of the Ha. That is, when the argyrodite crystal phase is represented by LiₐPS_{b}Ha_{c}, a total element ratio of the halogen elements represented by c is 1.3 or more. Accordingly, a high lithium ion conductivity can be achieved.

The content ratio represented by [Ha]/[P] (atomic ratio) is preferably 1.3 to 2, more preferably 1.4 to 1.9, and still more preferably 1.5 to 1.8. From the viewpoint of obtaining a higher lithium ion conductivity, the [Ha]/[P] (atomic ratio) is preferably 1.4 or more, and more preferably 1.5 or more. Further, from the viewpoint of preventing corrosion of a metal collector, the [Ha]/[P] (atomic ratio) is preferably 2 or less, more preferably 1.9 or less, and still more preferably 1.8 or less.

The argyrodite crystal phase may include only one kind of crystal phase having the same composition or two or more kinds of crystal phases having different compositions. In the case where two or more kinds of crystal phases having different compositions are included, at least one composition may have the characteristics of the ³⁵Cl-NMR spectrum and the characteristics of the [Ha]/[P] (atomic ratio), but other compositions preferably have such characteristics, and more preferably, all the included compositions have such characteristics.

A crystal structure constituting the argyrodite crystal phase can be analyzed from an X-ray powder diffraction (XRD) pattern. In the case where peaks are present at positions of 2θ = 15.7 ± 0.5° and 30.2 ± 0.5° in the XRD pattern, it can be said that the crystal is an argyrodite crystal. In addition to the above peaks, the XRD pattern preferably has a peak at a position of 2θ = 18.0 ± 0.5°, and more preferably has a peak also at a position of 2θ = 25.7 ± 0.5°.

The value of c when the argyrodite crystal phase is represented by LiₐPS_{b}Ha_{c} is as described above, and further, it is preferable to satisfy relationships of 5 ≤ a ≤ 7, 4 ≤ b ≤ 6, and 1.3 ≤ c ≤ 2 because the crystal tends to become an argyrodite crystal. Such element ratios more preferably satisfy relationships of 5.1 < a < 6.3, 4 < b < 5.3, and 1.4 ≤ c ≤ 1.9, and still more preferably satisfy relationships of 5.2 < a < 6.2, 4.1 < b < 5.2, and 1.5 ≤ c ≤ 1.8.

That is, a is preferably 5 or more, more preferably more than 5.1, and still more preferably more than 5.2, and is preferably 7 or less, more preferably less than 6.3, and still more preferably less than 6.2. In addition, b is preferably 4 or more, more preferably more than 4, and still more preferably more than 4.1, and preferably 6 or less, more preferably less than 5.3, and still more preferably less than 5.2. In addition, c is preferably 1.3 or more, more preferably 1.4 or more, and still more preferably 1.5 or more, and is preferably 2 or less, more preferably 1.9 or less, and still more preferably 1.8 or less.

In the case of the argyrodite crystal, a preferable crystal structure is, for example, a cubic crystal such as F-43m, and a hexagonal crystal, a tetragonal crystal, an orthorhombic crystal, a monoclinic crystal, or the like which have reduced symmetry or a triclinic crystal having further reduced symmetry may exist.

The halogen element represented by Ha is one or more halogen elements including at least Cl. By including Cl, the crystal easily becomes an argyrodite crystal.

The halogen element other than Cl is preferably at least one selected from the group consisting of F, Br, and I.

The halogen element may be only one element of Cl, but may be two or more elements including Cl. In this case, two or more elements including Cl and Br are preferable. By including Br, the lithium ion conductivity of the solid electrolyte itself can be improved, and it also contributes to the reduction of the elastic modulus, and thus, the lithium ion conductivity when the pressure-molded product is formed under a lower pressure is also improved.

In the case where the halogen element includes Br, similar to the area intensity ratio represented by S_{B}/S_{A} in the ³⁵Cl-NMR spectrum, an area intensity ratio of specific peaks in a ⁷⁹Br-NMR spectrum can be used to express a relatively small amount of Br located at the 4a site.

The ⁷⁹Br-NMR spectrum was obtained from the first principle calculation using the same method as the method for obtaining the ³⁵Cl-NMR spectrum from the first principle calculation described above. As a result, it has been found that in the argyrodite crystal structure, a peak at the 4a site is located on a lower magnetic field side, that is, on a side with a higher ppm value, compared to a peak at the 4d site.

### (Conditions)

Measurement is made using KBr as an external standard, a chemical shift position having the highest intensity in an obtained ⁷⁹Br-NMR spectrum is set to 54.5 ppm, and a ⁷⁹Br-NMR measurement is made to obtain the ⁷⁹Br-NMR spectrum under conditions of a probe: a probe for 3.2 mm solid, a measurement condition: a Haln Echo method, a pulse width: 1.4 µs, an observation center: 5.0 ppm, an observation width: 1 MHz, a relaxation delay: 0.3 sec, a cumulative number: 300000, and a rotation speed: 15 kHz.

In the ⁷⁹Br-NMR spectrum measured under the conditions, two overlapping peaks are observed at - 400 ppm to 400 ppm. When an area intensity ratio represented by S_{B2}/S_{A2} is 1 or more, where S_{A2} is an area intensity of a peak on a low magnetic field side of the observed peaks and S_{B2} is an area intensity of a peak on a high magnetic field side of the observed peaks, it means that a proportion of bromine (Br) at the 4d site surrounded by lithium (Li) increases.

In the case where the halogen element includes Cl and Br, a content ratio represented by [Cl]/[Br] (atomic ratio) is preferably 0.1 to 10, more preferably 0.2 to 3.0, still more preferably 0.3 to 1.6, and particularly preferably 0.5 to 0.8, where [Cl] is a content of Cl and [Br] is a content of Br in the argyrodite crystal phase. Here, a lower limit of [Cl]/[Br] (atomic ratio) is preferably 0.1 or more, more preferably 0.2 or more, still more preferably 0.3 or more, and particularly preferably 0.5 or more. The [Cl]/[Br] (atomic ratio) is preferably 10 or less, more preferably 3.0 or less, still more preferably 1.6 or less, and particularly preferably 0.8 or less.

When the [Cl]/[Br] (atomic ratio) satisfies the range, an interaction between lithium ions and halide ions is weakened, and the lithium ion conductivity of the solid electrolyte is likely to be satisfactory. This is considered to be due to the influence of a mixed anion effect, which weakens an interaction between cations and anions by mixing bromide ions having an ionic radius larger than that of chloride ions. In addition, when the [Cl]/[Br] (atomic ratio) satisfies the range, the cycle characteristics of a lithium-ion secondary battery are easily improved.

In the case where the halogen element includes Cl and Br, when the argyrodite crystal phase is represented by LiₐPS_{b}Cl_{c1}Br_{c2}, the content ratio represented by [Ha]/[P] (atomic ratio) is the same as the value represented by (c1 + c2). The (c1 + c2) may be 1.3 or more, preferably 1.3 to 2, more preferably 1.4 to 1.9, and still more preferably 1.5 to 1.8. Here, similarly to the value of c, from the viewpoint of obtaining a high lithium ion conductivity, the (c1 + c2) is preferably 1.4 or more, and more preferably 1.5 or more. Further, from the viewpoint of preventing corrosion of the metal collector, the (c1 + c2) is preferably 2 or less, more preferably 1.9 or less, and still more preferably 1.8 or less.

A value represented by c1 in LiₐPS_{b}Cl_{c1}Br_{c2} is the same as a content ratio represented by [Cl]/[P] (atomic ratio), where [P] is the content of the P and [Cl] is a content of the Cl. Preferably, c1 is 0.1 to 1.9, more preferably 0.5 to 1.5, and still more preferably 0.7 to 1.0. Here, a lower limit of c1 is preferably 0.1 or more, more preferably 0.5 or more, and still more preferably 0.7 or more. Further, c1 is preferably 1.9 or less, more preferably 1.5 or less, and still more preferably 1.0 or less.

A value represented by c2 in LiₐPS_{b}Cl_{c1}Br_{c2} is the same as a content ratio represented by [Br]/[P] (atomic ratio), where [P] is the content of the P and [Br] is a content of the Br. Preferably, c2 is 0.1 to 1.9, more preferably 0.5 to 1.5, and still more preferably 0.7 to 1.0. Here, a lower limit of c2 is preferably 0.1 or more, more preferably 0.5 or more, and still more preferably 0.7 or more. Further, c2 is preferably 1.9 or less, more preferably 1.5 or less, and still more preferably 1.0 or less.

When c 1 and c2 each satisfy the above ranges, a more stable argyrodite crystal phase can be obtained while an abundance proportion of halide ions in the crystal phase is optimized and the interaction between anions and lithium ions is reduced. As a result, the lithium ion conductivity tends to be satisfactory. When c1 and c2 each satisfy the above ranges, the cycle characteristics of the lithium-ion secondary battery are likely to be improved.

In addition, a, b, and (c1 + c2) preferably satisfy the same relationships as the above a, b, and c, respectively.

A crystallite size of the argyrodite crystal phase is preferably small from the viewpoint of obtaining a good lithium ion conductivity when the solid electrolyte is finely pulverized and made into a battery. Specifically, the crystallite size is preferably 1000 nm or less, more preferably 500 nm or less, and still more preferably 250 nm or less. A lower limit of the crystallite size is not particularly limited, and the crystallite size is generally 5 nm or more.

The crystallite size can be calculated by using a half-width of the peak of the XRD pattern and a Scherrer equation.

A raw material of the argyrodite crystal phase will be described in detail later, and a mixture including lithium sulfide (Li₂S) is preferably used as the raw material. Here, it is widely known that lithium sulfide is manufactured from lithium hydroxide (LiOH), and the lithium hydroxide may include at least one element (hereinafter, also referred to as "R") selected from the group consisting of Na, K, Mg, and Ca as an impurity. When an argyrodite crystal phase is manufactured using a raw material including R, R may also be included in the argyrodite crystal phase. Here, in order to reduce the content of R in the argyrodite crystal phase, it is necessary to use a high-purity raw material, and there is a concern that the producing cost increases.

However, if a content ratio of R in the argyrodite crystal phase is within a predetermined range, there is no influence on the lithium ion conductivity and heat resistance of the solid electrolyte, or even if there is the influence, the influence is negligible.

Therefore, the argyrodite crystal phase may include at least one element selected from the group consisting of Na, K, Mg, and Ca represented by R.

When an argyrodite crystal phase including R is represented by Liₐ₁Rₐ₂PS_{b}Ha_{c}, a content ratio represented by [R]/[P] (atomic ratio) is the same as a value represented by a2, where [R] is a content of the R and [P] is a content of the P. Preferably, a2 is 0.001 to 0.4, more preferably 0.01 to 0.3, and still more preferably 0.02 to 0.2. From the viewpoint of reducing the producing cost, a2 is preferably 0.001 or more, more preferably 0.01 or more, and still more preferably 0.02 or more. From the viewpoint of preventing a decrease in lithium ion conductivity, a2 is preferably 0.4 or less, more preferably 0.3 or less, and still more preferably 0.2 or less. The argyrodite crystal phase may not include R.

In addition, a1, b, and c preferably satisfy the same relationships as the above a, b, and c, respectively. However, a value of a1 may be a value smaller than the preferable numerical range of the above a according to the value of a2. In this case, a value of (a1 + a2) preferably satisfies a relationship of 5 ≤ (a1 + a2) < 7.

Among R, Mg and Ca may be included in the solid electrolyte as M constituting an oxide anion to be described later. In the case where the solid electrolyte includes at least one element of Mg and Ca, whether these elements are included as M or R can be determined by analyzing the crystal structure by the Rietveld analysis of the XRD pattern. When these elements are included as R, Mg and Ca are present in the crystal structure, and O²⁻is not present in the vicinity. Here, the expression "O²⁻ is not present in the vicinity" means that O²⁻ is not present within a second neighboring element of Mg or Ca.

### (Oxide Anion)

The crystal structure of the argyrodite crystal phase includes an anion, and the anion preferably includes an oxide anion having an M-O bond in which M and O are bonded. Accordingly, the solid electrolyte can be subjected to a heat treatment for reducing grain boundary resistance while maintaining a high lithium ion conductivity. The oxide anion included in the crystal structure may include only one anion or a plurality of anions.

The M is at least one element selected from the group consisting of a metal element and a metalloid element in groups 2 to 14 of a periodic table.

The metal element in groups 2 to 14 refers to one or more elements in groups 2 to 12, one or more elements in group 13 other than B, and one or more elements in group 14 other than C, Si, and Ge, in the periodic table.

The metalloid element in groups 2 to 14 refers to B, Si, and Ge among the elements in groups 13 and 14 in the periodic table.

Among them, it is more preferable to include at least one element selected from the group consisting of Al, B, Ge, La, Ta, Nb, Ti, Si, Sn, V, Y, and Zr.

The existence of the M-O bond in the oxide anions can be confirmed by Raman spectroscopy measurement or nuclear magnetic resonance (NMR) measurement.

In the case where the oxide anion is included in the crystal structure of the argyrodite crystal phase, with respect to all the components constituting the solid electrolyte, a total content of elements constituting the argyrodite crystal phase and the oxide anion is preferably 90 mass% or more, more preferably 92 mass% or more, and still more preferably 94 mass% or more, from the viewpoint of achieving a high lithium ion conductivity. An upper limit of the total content is not particularly limited, and may be 100 mass%. The crystal phase may include an amorphous crystal in addition to the argyrodite crystal. In addition, the crystal phase may include another argyrodite crystal phase including at least one of Li, P, S, and Ha.

The total content is, for example, a total content of the elements Li, P, S, Ha, M, and O, and is the total including the content of R when the argyrodite crystal includes R. In the present specification, the content of Ha refers to a total content of F, Cl, Br, and I.

The content of each element and the total thereof are determined by composition analysis using ICP emission spectrometry, atomic absorption, ion chromatography, or the like.

A proportion of the argyrodite crystal phase in the solid electrolyte is preferably 50 mass% or more, more preferably 65 mass% or more, and still more preferably 80 mass% or more, from the viewpoint of achieving a high lithium ion conductivity. An upper limit of the proportion of the argyrodite crystal phase is not particularly limited, and may be 100 mass%, but is generally 99 mass% or less. The proportion of the argyrodite crystal phase can be calculated by adding an internal standard substance, measuring with XRD or neutral-beam scattering, and then comparing a peak intensity with that of the internal standard substance.

Other than the argyrodite crystal phase and the oxide anion, for example, Li₃PS₄, Li₄P₂S₆, Li₂S, and LiHa (where Ha is at least one halogen element selected from F, Cl, Br, and I) may be included in the solid electrolyte.

The sulfide solid electrolyte according to the present embodiment achieves a high lithium ion conductivity even when made into a pressure-molded product at a low pressure, and the low pressure is, for example, in a range of 50 MPa to 100 MPa. As an index of the lithium ion conductivity in the pressure-molded product formed at the low pressure, for example, the lithium ion conductivity at 25°C when the sulfide solid electrolyte is made into a pressure-molded product at 80 MPa is preferably 2 mS/cm or more, more preferably 3 mS/cm or more, and still more preferably 4 mS/cm or more, and the higher the lithium ion conductivity, the better.

In achieving the lithium ion conductivity in the above range, an elastic modulus of the sulfide solid electrolyte is preferably 40 GPa or less, more preferably 30 GPa or less, and still more preferably 20 GPa or less, from the viewpoint of reducing interfacial resistance between particles serving as the solid electrolyte, that is, the grain boundary resistance. The elastic modulus of the sulfide solid electrolyte can be determined by measuring a green compact with a nanoindenter or by fixing a powder and measuring the powder with an atomic force microscope (AFM).

### <Method for Producing Sulfide Solid Electrolyte>

In a method for producing the sulfide solid electrolyte to be used for a lithium-ion secondary battery according to the present embodiment, it is important that an intermediate compound before obtaining an argyrodite crystal phase is a homogeneous compound. The homogeneous compound is not simply a mixture of a plurality of raw materials, but one in which the raw materials react with each other and a structure thereof becomes, for example, amorphous or melted into a molten solution.

To make the structure amorphous, for example, there is a method in which raw materials are mixed by a medium-less pulverizer such as a mixer mill or a pin mill, and then mechanically mixed by a medium pulverizer such as a planetary ball mill, a bead mill, or Attritor (registered trademark) to cause a mechanochemical reaction. In order to further promote the mechanochemical reaction known in the related art, it is more preferable to perform the mechanochemical reaction under a humidified atmosphere. Accordingly, an amorphous homogeneous intermediate is obtained.

A specific environment as a humidified atmosphere in the mixing to make the structure amorphous preferably has a dew point of -60°C to -30°C, and more preferably -50°C to -30°C. Here, a lower limit of the dew point is preferably -60°C or higher, and more preferably -50°C or higher. In addition, from the viewpoint of preventing generation of a large amount of hydrogen sulfide due to a reaction between a sulfide and water during synthesis, an environment having a dew point of -30°C or lower is preferable. The dew point here means a dew point of the entire equipment.

Examples of a method for obtaining a molten solution include a method in which raw materials are mixed by a mixer mill or a pin mill and then dissolved. Accordingly, a molten solution in a dissolved state can be served as an intermediate compound which is a homogeneous compound. The raw materials may be once dissolved in an organic solvent or the like.

The method for producing the sulfide solid electrolyte according to the present embodiment is not particularly limited as long as an argyrodite crystal phase can be obtained through such a homogeneous intermediate compound. Examples thereof include the following two producing methods: a producing method i and a producing method ii.

### (Producing Method i)

The producing method i includes:
a step i-1 of mixing raw materials including Li, P, S, and Ha to obtain a raw material mixture;
a step i-2 of heating the raw material mixture to obtain a molten material as a homogeneous intermediate compound; and
a step i-3 of cooling the molten material to precipitate an argyrodite crystal, in which
the Ha is one or more halogen elements including at least Cl.

### (Producing Method ii)

The producing method ii includes:
a step ii-1 of mixing raw materials including Li, P, S, and Ha to obtain an amorphous intermediate compound; and
a step ii-2 of heating and sintering the intermediate compound to precipitate an argyrodite crystal, in which
the Ha is one or more halogen elements including at least Cl, and
the intermediate compound obtained in the step ii-1 is an amorphous intermediate compound in which no peaks derived from the raw materials are observed in powder X-ray diffraction measurement.

First, the producing method i will be described.

The step i-1 is a step of mixing raw materials including Li, P, S, and Ha to obtain a raw material mixture.

The raw materials including Li, P, S, and Ha may be known materials according to the related art as materials for obtaining an argyrodite crystal including Li, P, S, and Ha. Examples thereof include a mixture of a compound containing Li (lithium), a compound containing P (phosphorus), a compound containing S (sulfur), and a compound containing Ha (halogen).

Examples of the compound containing Li include lithium compounds such as lithium sulfide (Li₂S), lithium oxide (Li₂O), lithium carbonate (Li₂CO₃), lithium hydroxide (LiOH), and lithium sulfate (Li₂SO₄), and elemental lithium metal.

Examples of the compound containing P include phosphorus sulfides such as phosphorus trisulfide (P₂S₃) and phosphorus pentasulfide (P₂S₅), phosphorus compounds such as lithium phosphate (LiPO₃, Li₄P₂O₇, and Li₃PO₄) and sodium phosphate (NaPO₃, Na₄P₂O₇, and Na₃PO₄), and simple phosphorus.

Examples of the compound containing S include lithium sulfide (Li₂S), phosphorus sulfides (P₂S₃ and P₂S₅), and hydrogen sulfide (H₂S), and elemental sulfur may also be used.

Among the compounds containing the Ha, examples of a compound containing Cl (chlorine) include lithium chloride (LiCl), phosphorus trichloride (PCl₃), phosphorus pentachloride (PCl₅), diphosphorus tetrachloride (P₂Cl₄), phosphoryl chloride (POCl₃), sulfur dichloride (SCl₂), disulfur dichloride (S₂Cl₂), sodium chloride (NaCl), and boron trichloride (BCl₃).

Among the compound containing Ha, examples of a compound containing Br (bromine) include lithium bromide (LiBr), phosphorus tribromide (PBr₃), phosphoryl chloride (POBr₃), disulfur dibromide (S₂Br₂), sodium bromide (NaBr), and boron tribromide (BBr₃).

Among them, a combination of lithium sulfide, phosphorus sulfides, and at least one of lithium chloride and lithium bromide is preferable.

These raw materials may be very unstable in the air, may react with water and decomposed, and may generate hydrogen sulfide gas or be oxidized. Therefore, the raw materials are preferably mixed in an inert atmosphere.

The raw materials can be mixed by, for example, medium-less mixing such as a mixer mill, a pin mill, a powder stirrer, and air flow mixing. A part of the raw materials may be made amorphous by mixing before the step i-2.

The step i-2 is a step of heating the obtained raw material mixture to obtain a molten material as an intermediate compound.

The confirmation of whether the material is in a molten state means that no peaks derived from the raw materials are observed in high-temperature X-ray diffraction measurement. In the case of a Li-P-S-Ha composition, the molten solution mixes well, which means that the molten solution is a homogeneous compound molten material that is different from the raw materials. As a simple method to confirm whether the material is in a molten state, it can be confirmed by observing the state of the raw materials in a furnace. When no un-melted material is observed, the raw materials are completely dissolved and the molten material may be said to be a homogeneous intermediate compound.

By passing through the homogeneous intermediate compound, a sulfide solid electrolyte can be obtained in which, in the ³⁵Cl-NMR spectrum, an area intensity ratio represented by S_{B}/S_{A} is 3.5 or more, or a peak is observed at -150 ppm to 0 ppm and no peak is observed at 0 ppm to 30 ppm.

The high-temperature X-ray diffraction measurement is performed after setting the measurement temperature, holding time, atmosphere, and the like such that conditions are the same as heating conditions used to obtain the molten material.

By performing the high-temperature X-ray diffraction measurement while changing the measurement temperature, changes in crystal state such as phase transition can be followed and the heating temperature at which an intermediate compound can be obtained can be estimated.

The heating conditions for obtaining the molten material vary depending on the raw materials to be used and the composition of the raw material mixture.

The heating temperature may be equal to or higher than a heating temperature at which the homogeneous amorphous intermediate compound can be obtained. For example, the heating temperature is preferably 550°C to 950°C, more preferably 600°C to 900°C, still more preferably 600°C to 850°C, and particularly preferably 650°C to 800°C. A lower limit of the heating temperature is preferably 550°C or higher, more preferably 600°C or higher, and still more preferably 650°C or higher. The heating temperature is preferably 950°C or lower, more preferably 900°C or lower, still more preferably 850°C or lower, and particularly preferably 800°C or lower, from the viewpoint of preventing composition deviation due to volatilization of the components. The heating temperature may be changed stepwise in the above temperature range. The higher the halogen content represented by [Ha]/[P] (atomic ratio) in the composition is, the lower the heating temperature can be set.

The heating time may be equal to or longer than a time at which the homogeneous amorphous intermediate compound can be obtained, and may vary also depending on the scale. For example, the heating time is preferably 2 minutes to 360 minutes, more preferably 5 minutes to 180 minutes, and still more preferably 10 minutes to 120 minutes. A lower limit of the heating time is preferably 2 minutes or longer, more preferably 5 minutes or longer, and still more preferably 10 minutes or longer. The heating time is preferably 360 minutes or shorter, more preferably 180 minutes or shorter, and still more preferably 120 minutes or shorter, from the viewpoint of productivity.

By stirring during heating and melting, a molten material to be an amorphous intermediate compound can be made more homogeneous. The more homogeneous the mixing in the step i-1 is, the shorter the heating time in the subsequent step ii-2 can be set.

As described above, the raw materials are preferably mixed in an inert atmosphere, and the molten material is also preferably obtained by heating in the inert atmosphere as it is. Examples of the inert atmosphere include an Ar atmosphere and a nitrogen atmosphere, and a nitrogen atmosphere is more preferable from the viewpoint of production cost. The heating may be performed in a vacuum-sealed state.

When Ha in the argyrodite crystal phase includes Br in addition to Cl, Br is less likely to enter the crystal structure since Br has an ionic radius larger than that of Cl. Therefore, a homogeneous intermediate compound can be easily obtained when the heating conditions for obtaining the molten material is adjusted by making the heating temperature higher than the above range, making the heating time longer, or performing both.

However, in the producing method i in which the molten material is the intermediate compound, the intermediate compound is very likely to be homogeneous originally because of a high fluidity thereof. Therefore, Br having a large ion radius also easily enters the crystal structure and further easily enters the 4d site, and thus the above adjustment is not necessarily required.

The amorphous intermediate compound may suffice as long as no peaks derived from the raw materials are observed in the high-temperature X-ray diffraction measurement, and from the viewpoint of homogeneity, the amorphous intermediate compound is preferably a homogeneous molten solution with no phase separation. In the case of the Li-P-S-Ha composition, the molten solution mixes well without phase separation, but the presence or absence of the phase separation can be confirmed visually or optically by checking whether light is transmitted without being scattered.

The step i-3 is a step of cooling the molten material, which is a homogeneous intermediate compound, to precipitate an argyrodite crystal. As described above, as long as the lithium ion conductivity and elastic modulus of the solid electrolyte are not affected, impurities such as R derived from the raw materials or the like may be included in the argyrodite crystal.

Cooling conditions for precipitating crystals vary depending on the composition and target crystallization rate.

A cooling rate is not particularly limited as long as an argyrodite crystal is precipitated, but is preferably 5°C/min to 2000°C/min, more preferably 10°C/min to 1000°C/min, and still more preferably 30°C/min to 300°C/min. From the viewpoint of productivity, the cooling rate is preferably 5°C/min or more, more preferably 10°C/min or more, and still more preferably 30°C/min or more. From the viewpoint of increasing the crystallization rate, the cooling rate is preferably 2000°C/min or less, more preferably 1000°C/min or less, and still more preferably 300°C/min or less.

It is more preferable to extend a residence time at 200°C to 450°C during cooling to perform crystal growth or reconstruction of the crystal structure from the viewpoint of improving the lithium ion conductivity.

An atmosphere during cooling is preferably an inert atmosphere, similar to that for the mixing of raw materials and heating for obtaining the molten material. In the case where the heating for obtaining the molten material is performed under a vacuum-sealed state, the cooling may also be performed under the vacuum-sealed state as it is.

As described above, by employing the producing method i according to the present embodiment, a solid electrolyte can be obtained in which an area intensity ratio represented by S_{B}/S_{A} is 3.5 or more, or a peak is observed at -150 ppm to 0 ppm and no peak is observed at 0 ppm to 30 ppm, in the ³⁵Cl-NMR spectrum. As a result, even if the element ratio of the halogen element is not increased as in the related art, a high lithium ion conductivity can be achieved in the pressure-molded product formed at a low pressure.

A preferable aspect of the obtained solid electrolyte is the same as the preferable aspect described in the above <Sulfide Solid Electrolyte>.

Next, the producing method ii will be described.

The step ii-1 is a step of mixing raw materials including Li, P, S, and Ha to obtain an amorphous intermediate compound.

The raw materials including Li, P, S, and Ha are the same as those described in step i-1 of producing method i and can be used under the same conditions.

An amorphous intermediate compound can be obtained by adopting conditions that are much stricter than in the related art in mixing these raw materials.

An amorphous (non-crystalline) intermediate compound means that no peaks derived from the raw materials are observed in the X-ray diffraction measurement, and this means that the amorphous intermediate compound is a homogeneous compound that is different from the raw materials. By passing through the amorphous intermediate compound, a sulfide solid electrolyte can be obtained in which an area intensity ratio represented by S_{B}/S_{A} is 3.5 or more, or a peak is observed at -150 ppm to 0 ppm and no peak is observed at 0 ppm to 30 ppm, in the ³⁵Cl-NMR spectrum.

In the case of, for example, using a mechanical milling method using a ball mill to mix the raw materials, examples thereof include a rotary ball mill that provides rotation movement to a container, a vibrating ball mill that provides vibrational movement, a planetary ball mill that provides revolution and rotational movement, a bead mill, and Attritor (registered trademark), and any of these methods can be adopted as long as the conditions are employed such that an amorphous intermediate compound can be obtained. Among them, a planetary ball mill, Attritor (registered trademark), or a bead mill having a higher mixing force or pulverizing force is preferable.

In the case of the mechanical milling method using a ball mill, the higher the rotation speed, the longer the mixing time, and the smaller the particle diameter of the ball, the higher the mixing force and pulverizing force.

The rotation speed varies depending on the type of ball mill to be used or other conditions, and is preferably 200 rpm to 1000 rpm, more preferably 300 rpm to 800 rpm, and still more preferably 400 rpm to 800 rpm. A lower limit of the rotation speed is preferably 200 rpm or more, more preferably 300 rpm or more, and still more preferably 400 rpm or more. An upper limit of the rotation speed is not particularly limited, but is preferably 1000 rpm or less, and more preferably 800 rpm or less, from the viewpoint of mechanical strength. When the rotation speed is defined by a peripheral speed as in the bead mill, the peripheral speed is preferably 8 m/sec or more, and more preferably 10 m/sec or more. An upper limit of the peripheral speed is not particularly limited, but is 20 m/sec or less from a practical viewpoint.

A plurality of rotation speeds may be combined, such as initially mixing at a low rotation speed for a certain period of time, then increasing the rotation speed to a high rotation speed and mixing for a certain period of time.

The mixing time varies depending on the type of ball mill to be used or other conditions. In the case of the planetary ball mill, the mixing time is preferably 5 hours to 300 hours, more preferably 8 hours to 300 hours, and still more preferably 12 hours to 150 hours. A lower limit of the mixing time is preferably 5 hours or longer, more preferably 8 hours or longer, and still more preferably 12 hours or longer. An upper limit of the mixing time is not particularly limited, but is preferably 300 hours or shorter, and more preferably 150 hours or shorter, from the viewpoint of productivity.

In the case of a circulation treatment method as in the bead mill, the number of passes is preferably 20 to 500 passes, more preferably 50 to 500 passes, and still more preferably 100 to 300 passes. A lower limit of the number of passes is preferably 20 passes or more, more preferably 50 passes or more, and still more preferably 100 passes or more. From the viewpoint of productivity, the number of passes is preferably 500 passes or less, and more preferably 300 passes or less.

The particle diameter of the ball varies depending on the type of ball mill to be used or other conditions, and is preferably 0.1 mm to 5 mm, more preferably 0.1 mm to 4 mm, and still more preferably 0.3 mm to 1 mm. An upper limit of the particle diameter of the ball is preferably 5 mm or less, more preferably 4 mm or less, and still more preferably 1 mm or less. A lower limit of the particle diameter of the ball is preferably 0.1 mm or more, and more preferably 0.3 mm or more, from the viewpoint of ease of handling. Two or more kinds of balls having different particle diameters may be used in combination.

An amount of balls to be used varies depending on the type of ball mill to be used or other conditions. From the viewpoint of mixing force and pulverizing force, the weight of the balls to be used is preferably 100% or more, more preferably 200% or more, and still more preferably 500% or more, and is preferably 1000% or less, with respect to a total weight of the raw materials.

The ball mill may be dry mixing or wet mixing using a dispersion medium, and dry mixing is preferable from the viewpoint of efficiently transmitting energy.

As described above, from the viewpoint of further promoting the mechanochemical reaction, the dew point of the entire equipment during mixing is preferably -60°C or higher, and more preferably -50°C or higher. In addition, from the viewpoint of preventing generation of a large amount of hydrogen sulfide due to a reaction between a sulfide and water during synthesis, the dew point is preferably -30°C or lower.

In the producing method ii-1, when the raw materials before mixing are handled or after the amorphous intermediate compound is obtained, the dew point may be -50°C or lower or lower than -60°C. However, from the viewpoint of productivity, the dew point is preferably the same as that of the mixing atmosphere. The atmosphere is preferably an inert atmosphere such as nitrogen and argon, but may include 5% or less of oxygen.

By the mixing as described above, not only the raw materials are mixed, but also the mixed powder is made amorphous, and a homogeneous amorphous intermediate compound can be obtained.

As described above, the obtained amorphous intermediate compound means that no XRD peaks derived from the raw materials are observed. However, when it can be confirmed in the Raman spectrum that a peak at a position derived from the raw materials completely disappears and is not observed and a peak appears at another position different from the position, it can be determined that a more homogeneous amorphous intermediate compound is obtained.

A particle diameter of the intermediate compound is preferably 30 nm to 5 µm, more preferably 0.1 µm to 3 µm, and still more preferably 0.1 µm to 2 µm. In the powder X-ray diffraction measurement used for verifying the obtained amorphous intermediate compound, when the particle diameter of the sample powder is very small, no peak may be observed even in the case where the sample powder is crystalline. Therefore, from the viewpoint of distinguishing a mixture of raw materials having a very small particle diameter from an amorphous intermediate compound, the particle diameter of the intermediate compound is preferably 30 nm or more, and more preferably 0.1 µm or more. Further, from the viewpoint of increasing a surface area of the powder and efficiently advancing the subsequent reaction, the particle diameter of the intermediate compound is preferably 5 µm or less, more preferably 3 µm or less, and still more preferably 2 µm or less.

The particle diameter of the intermediate compound in the present description is a primary particle diameter determined from an SEM image obtained by scanning electron microscopic (SEM) observation. Specifically, the particle diameter is determined by performing SEM measurement without exposure to the air, observing at a magnification of 2000 times and an accelerating voltage of 2 kV, measuring the particle diameters of 20 particles reflected within an appropriate field of view, and determining an average value thereof as the particle diameter.

The step ii-2 is a step of heating and sintering the amorphous intermediate compound obtained in the step ii-1 to precipitate an argyrodite crystal. As described above, as long as the lithium ion conductivity and elastic modulus of the solid electrolyte are not affected, impurities such as R derived from the raw materials or the like may be included in the argyrodite crystal.

The heating is preferably performed, for example, under an inert gas atmosphere, under a hydrogen sulfide gas atmosphere, under a sulfur gas atmosphere, or under a vacuum-sealed state.

The heating temperature is preferably 350°C or higher and lower than 600°C, more preferably 400°C or higher and lower than 600°C, and still more preferably 450°C to 575°C. Here, from the viewpoint of promoting the solid phase reaction, that is, crystallization, the heating temperature is preferably 350°C or higher, more preferably 400°C or higher, and still more preferably 450°C or higher. From the viewpoint of preventing thermal decomposition, the heating temperature is preferably lower than 600°C, and more preferably 575°C or lower.

From the same viewpoint, the heating time is preferably 1 hour to 100 hours, more preferably 2 hours to 50 hours, and still more preferably 4 hours to 24 hours. Here, a lower limit of the heating time is preferably 1 hour or longer, more preferably 2 hours or longer, and still more preferably 4 hours or longer. The heating time is preferably 100 hours or shorter, more preferably 50 hours or shorter, and still more preferably 24 hours or shorter.

As described above, by employing the producing method ii according to the present embodiment, a solid electrolyte can be obtained in which an area intensity ratio represented by S_{B}/S_{A} is 3.5 or more, or a peak is observed at -150 ppm to 0 ppm and no peak is observed at 0 ppm to 30 ppm, in the ³⁵Cl-NMR spectrum. As a result, even if the element ratio of the halogen element is not increased as in the related art, a high lithium ion conductivity can be achieved in the pressure-molded product formed at a low pressure.

A preferable aspect of the obtained solid electrolyte is the same as the preferable aspect described in the above <Sulfide Solid Electrolyte>.

### <Lithium-ion Secondary Battery>

The sulfide solid electrolyte according to the present embodiment is used for a lithium-ion secondary battery.

In the case where the sulfide solid electrolyte is used for the lithium-ion secondary battery, the sulfide solid electrolyte may form a solid electrolyte layer together with other components such as a binder as necessary. As the binder or other components, known substances according to the related art can be used.

A content of the solid electrolyte relative with respect to the entire solid electrolyte layer is preferably 80 mass% or more, and more preferably 90 mass% or more.

As a method for forming the solid electrolyte layer, a known method according to the related art can also be used. For example, the solid electrolyte layer can be formed by dispersing the components constituting the solid electrolyte layer in a dispersion medium or dissolving the components in a solvent to form a slurry, applying the slurry in the form of a layer (sheet), drying the slurry, and freely pressing the slurry. If necessary, the binder may be removed by heating. A thickness of the solid electrolyte layer can be easily adjusted by adjusting a coating amount or the like of the slurry.

In addition, instead of the wet molding, the solid electrolyte layer may be formed by press-molding the sulfide solid electrolyte powder or the like on a surface of a positive electrode, a negative electrode, or the like by a dry method. Alternatively, the solid electrolyte layer may be formed on another base material and transferred onto the surface of the positive electrode, the negative electrode, or the like.

The solid electrolyte according to the present embodiment has a low elastic modulus and can achieve a high lithium ion conductivity even in a pressure-molded product formed at a low pressure. Therefore, when the press molding is performed as described above, a value of about 50 MPa to 100 MPa can be adopted as a pressure lower than the pressure in the related art. A pressure even lower than 50 MPa may be adopted.

The solid electrolyte may be mixed with a positive electrode active material or a negative electrode active material to be used as a positive electrode layer or a negative electrode layer. As the positive electrode active material or negative electrode active material used for the positive electrode layer or negative electrode layer, a current collector, a binder, a conductive aid, and the like, known materials according to the related art can be used.

A lithium-ion secondary battery for which the solid electrolyte is used includes the solid electrolyte layer, the positive electrode layer, and the negative electrode layer.

As a material of an outer casing of the lithium-ion secondary battery, known materials according to the related art may also be used. As a shape of the lithium-ion secondary battery, known shapes according to the related art may be used, and examples of the shape of the lithium-ion secondary battery include a coin shape, a sheet shape (film shape), a folded shape, a wound cylindrical shape with a bottom, and a button shape. The shape thereof can be appropriately selected according to the application.

### EXAMPLES

The present invention will be specifically described below with reference to Examples, but the present invention is not limited thereto.

Examples 1 to 4, 7, and 8 are Inventive Examples, and Examples 5, 6, 9, and 10 are Comparative Examples.

### [Example 1]

Under a dry nitrogen atmosphere, a lithium sulfide powder (manufactured by Sigma Corporation, purity: 99.98%), a phosphorus pentasulfide powder (manufactured by Sigma Corporation, purity: 99%), and a lithium chloride powder (manufactured by Sigma Corporation, purity: 99.99%) were weighed so as to achieve a composition ratio shown in Table 1, and mixed for 1 minute in a High mode with a mixer (X-TREME (MX1100XTM) manufactured by WARING) in the same atmosphere to obtain a raw material mixture (step i-1). The obtained raw material mixture was vacuum-sealed in a quartz tube, and heated at 700°C for 25 minutes to obtain a molten material (step i-2). The molten material was cooled to room temperature at a rate of 300°C/min while being sealed to precipitate an argyrodite crystal, thereby obtaining a sulfide solid electrolyte including an argyrodite crystal phase (step i-3).

In addition, a state of the raw materials in a furnace was observed under the same conditions as the molten material, that is, when the raw material mixture was held at 700°C for 25 minutes, and as a result, no un-melted material was confirmed. Thus, it was confirmed that the molten material was a homogeneous intermediate compound.

### [Examples 2 and 5]

A sulfide solid electrolyte including an argyrodite crystal phase of each of Examples 2 and 5 was obtained in the same manner as in Example 1 except that the composition ratio and the heating time in the step i-2 were changed to those shown in Table 1.

In addition, as in Example 1, a state of the raw materials in a furnace was observed under the same conditions as the molten material, that is, when the raw material mixture was held at 700°C for 60 minutes or 1 minute, and as a result, no un-melted material was observed in Example 2, and something like un-melted material was observed in Example 5. Thus, it was confirmed that the molten material of Example 2 was a homogeneous intermediate compound. In addition, the condition of Example 5 is considered to be a condition in which the molten material does not yet become a completely homogeneous intermediate compound.

### [Examples 3 and 4]

A sulfide solid electrolyte including an argyrodite crystal phase of each of Examples 3 and 4 was obtained in the same manner as in Example 1 except that the composition ratio and the heating time in the step i-2 were changed to those shown in Table 1. As a raw material, in addition to the lithium sulfide powder, the phosphorus pentasulfide powder, and the lithium chloride powder which are the same as those of Example 1, a lithium bromide powder (manufactured by Sigma Corporation, purity: 99.995%) was used.

In addition, as in Example 1, a state of the raw materials in a furnace was observed under the same conditions as the molten material, that is, when the raw material mixture was held at 700°C for 60 minutes, and as a result, no un-melted material was confirmed. Thus, it was confirmed that both the molten materials of Examples 3 and 4 were homogeneous intermediate compounds.

### [Example 6]

Under a dry nitrogen atmosphere, a lithium sulfide powder (manufactured by Sigma Corporation, purity: 99.98%), a phosphorus pentasulfide powder (manufactured by Sigma Corporation, purity: 99%), and a lithium chloride powder (manufactured by Sigma Corporation, purity: 99.99%) were weighed so as to achieve a composition ratio shown in Table 1, and mixed in a mortar in the same atmosphere to obtain a raw material mixture (step i-1). The obtained raw material mixture was vacuum-sealed in a quartz tube, and heated at 700°C for 1 minute to obtain a molten material (step i-2). The molten material was cooled to room temperature at a rate of 300°C/min while being sealed to precipitate an argyrodite crystal, thereby obtaining a sulfide solid electrolyte including an argyrodite crystal phase (step i-3).

In addition, as in Example 1, a state of the raw materials in a furnace was confirmed under the same conditions as the molten material, that is, when the raw material mixture was held at 700°C for 1 minute, and as a result, something like un-melted material was observed. Thus, the condition of Example 6 is considered to be a condition in which the molten material does not become a completely homogeneous intermediate compound.

### [Example 7]

Under a dry nitrogen atmosphere having a dew point of -60°C, a lithium sulfide powder (manufactured by Sigma Corporation, purity: 99.98%), a phosphorus pentasulfide powder (manufactured by Sigma Corporation, purity: 99%), and a lithium chloride powder (manufactured by Sigma Corporation, purity: 99.99%) were weighed so as to achieve a composition ratio shown in Table 1, mixed with a mixer for 1 minute, and then further mixed by using a planetary ball mill (LP-M2, manufactured by Ito Seisakusho Co., Ltd.) to obtain an intermediate compound (step ii-1). The mixing by the planetary ball mill was performed at 400 rpm for 50 hours using a ball having a particle diameter of 4 mm as shown in Table 1. The obtained intermediate compound was vacuum-sealed in a quartz tube, and heated and sintered at 450°C for 5 hours to precipitate an argyrodite crystal, thereby obtaining a sulfide solid electrolyte including an argyrodite crystal phase (step ii-2).

A primary particle diameter was confirmed from an SEM image as the particle diameter of the intermediate compound before heating and sintering, and as a result, the primary particle diameter was 0.9 µm. In addition, no peaks of lithium sulfide, phosphorus pentasulfide, and lithium chloride, which were raw materials, were observed by powder X-ray diffraction measurement (SmartLab, manufactured by Rigaku Corporation), and a halo pattern derived from an amorphous material was obtained. Thus, it was confirmed that the intermediate compound was a homogeneous amorphous intermediate compound.

Measurement conditions of the X-ray diffraction measurement are as follows.

Radiation Source: CuKα ray (λ = 1.5418 Å), tube bulb voltage: 45 kV, tube bulb current: 200 mA, scanning angle: 10° to 100°, scanning speed: 5°/min, number of steps: 0.01°/step.

### [Example 8]

A sulfide solid electrolyte including an argyrodite crystal phase was obtained in the same manner as in Example 7 except that the composition ratio was changed to those shown in Table 1, the dew point of the entire equipment was set to -50°C, and the raw materials were prepared under such an atmosphere, mixed by a planetary ball mill, and vacuum-sealed in a quartz tube. As a raw material, in addition to the lithium sulfide powder, the phosphorus pentasulfide powder, and the lithium chloride powder which are the same as those of Example 7, a lithium bromide powder (manufactured by Sigma Corporation, purity: 99.995%) was used.

The primary particle diameter of the intermediate compound before heating and sintering was 0.9 µm. In addition, as in Example 7, no peaks of lithium sulfide, phosphorus pentasulfide, lithium chloride, and lithium bromide, which were raw materials, were observed by powder X-ray diffraction measurement, and a halo pattern derived from an amorphous material was obtained. Thus, it was confirmed that the intermediate compound was a homogeneous amorphous intermediate compound.

### [Examples 9 and 10]

A sulfide solid electrolyte including an argyrodite crystal phase was obtained in the same manner as in Example 7 except that the conditions for mixing by the planetary ball mill in the step ii-1 were changed in Example 9 and the composition ratio and the conditions for mixing by the planetary ball mill in the step ii-1 were changed in Example 10. The conditions for mixing in Examples 9 and 10 were as shown in Table 1, that is, the mixing was performed at 400 rpm for 4 hours using a ball having a particle diameter of 10 mm.

The primary particle diameter of the intermediate compound before heating and sintering was 7.3 µm, and peaks of lithium sulfide, phosphorus pentasulfide, and lithium chloride, which were raw materials, were observed by powder X-ray diffraction measurement. Thus, it was confirmed that the intermediate compound was not a homogeneous amorphous intermediate compound.

### [Evaluation]

### (³⁵Cl-NMR)

The obtained sulfide solid electrolyte was packed in a ZrO₂ sample tube having a diameter of 3.2 mm in a simple glove box, and a nuclear magnetic resonance apparatus (ECZ700 manufactured by JEOL Ltd.) was used to obtain a ³⁵Cl-NMR spectrum.

Measurement conditions were as follows.
Nuclide: ³⁵Cl
Probe: 3.2 mm for solids
Measurement conditions: Single pulse method
Pulse width: 2.45 µs
Observation center: 20 ppm
Observation width: 1000 ppm
Relaxation delay: 10 sec
Cumulative number: 1024
Rotation speed: 15 kHz
External standard: a chemical shift position having the highest intensity in the ³⁵Cl-NMR spectrum of LiCl is set to 9.93 ppm.

In the measured ³⁵Cl-NMR spectrum, an area intensity ratio represented by S_{B}/S_{A} was determined, where S_{A} was an area intensity of a peak observed at 0 ppm to 30 ppm and S_{B} was an area intensity of a peak observed at -150 ppm to 0 ppm.

Specifically, an area of the peak A1 having a peak top in the range of 0 ppm to 30 ppm was determined using an integration range of 0 ppm to 20 ppm. Further, regarding the peak A2 having a peak top near 228 ppm and the peak A3 having a peak top near -208 ppm as the spinning side band of the peak A, areas thereof were also determined using integration ranges of 220 ppm to 240 ppm and -220 ppm to -200 ppm, respectively. A total area of the peak A1, the peak A2, and the peak A3 was defined as the area intensity S_{A} of the peak A. A spinning side band derived from the peak A1 was also observed near ±450 ppm, but the spinning side band was not included in the calculation of area intensity because the spinning side band was weak.

Next, an area of the peak B having a peak top in a range of -75 ppm to -25 ppm was determined using an integration range of -160 ppm to 20 ppm, and a value obtained by subtracting the area of the peak A having an overlapping integration range from the area of the peak B was defined as the area intensity S_{B} of the peak B.

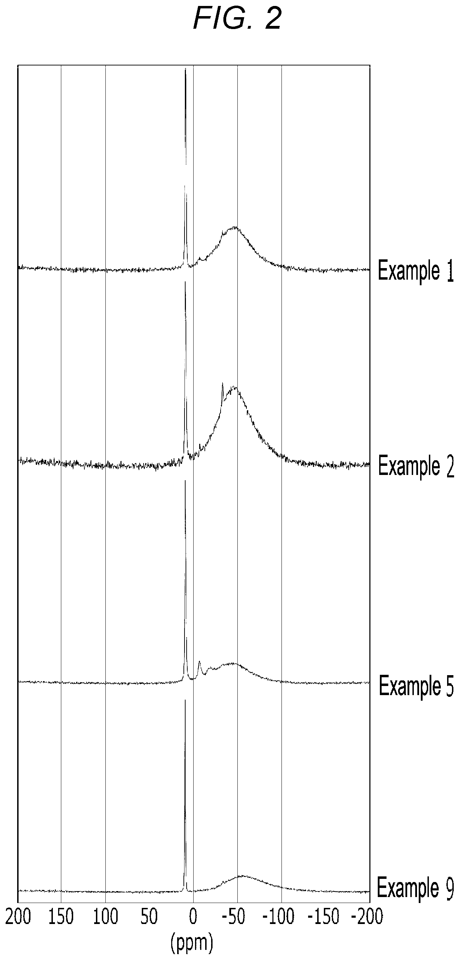

Results are shown in "S_{B}/S_{A} (³⁵Cl-NMR)" in Table 1. The ³⁵Cl-NMR spectra of Examples 1, 2, 5, and 9 are shown in FIG. 2.

### (Lithium Ion Conductivity)

The obtained sulfide solid electrolyte was pulverized in a mortar, coarse particles were removed by a mesh pass having an opening of 100 µm, then 100 mg of the sulfide solid electrolyte was weighed and taken, and the lithium ion conductivity of the measurement sample was measured by using an AC impedance measuring device (potentiostat/galvanostat VSP, manufactured by Bio-Logic Sciences Instruments) while pressure-molding the measurement sample with an area of 10 mm in diameter at 80 MPa.

The measurement conditions were as follows: a measurement frequency of 100 Hz to 1 MHz, a measurement voltage of 100 mV, and a measurement temperature of 25°C.

Results are shown in "σ25 (mS/cm) (80 MPa)" in Table 1.

**Table 1**

| | Mixing of raw materials | Intermediate compound formation conditions (step i-2) | Argyrodite crystal formation conditions (step i-3) | Composition (at%) | | | | | S_{B}/S_{A} (³⁵Cl-NMR) | σ25 (mS/cm) (80 MPa) |
|---|---|---|---|---|---|---|---|---|---|---|
| | | | | Li | P | S | Cl | Br | | |
| Example 1 | Mixer | 700°C-25 min-Sealing | Cooling rate 300°C/min | 5.55 | 1.00 | 4.42 | 1.58 | 0.00 | 5.0 | 5.1 |
| Example 2 | Mixer | 700°C-60 min-Sealing | Cooling rate 300°C/min | 5.51 | 1.00 | 4.39 | 1.53 | 0.00 | 9.1 | 6.1 |
| Example 3 | Mixer | 700°C-60 min-Sealing | Cooling rate 300°C/min | 5.49 | 1.00 | 4.38 | 1.02 | 0.63 | 70.0 | 9.5 |
| Example 4 | Mixer | 700°C-60 min-Sealing | Cooling rate 300°C/min | 5.48 | 1.00 | 4.42 | 1.49 | 0.19 | 14.3 | 6.2 |
| Example 5 | Mixer | 700°C-1 min-Sealing | Cooling rate 300°C/min | 5.52 | 1.00 | 4.48 | 1.50 | 0.00 | 3.3 | 2.3 |
| Example 6 | Hand mixing | 700°C-1 min-Sealing | Cooling rate 300°C/min | 5.50 | 1.00 | 4.45 | 1.52 | 0.00 | 1.6 | 1.8 |

| | Mixing of raw materials | Intermediate compound formation conditions (step ii-1) | Argyrodite crystal formation conditions (step ii-2) | Composition (at%) | | | | | S_{B}/S_{A} (³⁵Cl-NMR) | σ25 (mS/cm) (80 MPa) |
|---|---|---|---|---|---|---|---|---|---|---|
| | | | | Li | P | S | Cl | Br | | |
| Example 7 | Mixer | Ball mill 4 mm-400 rpm × 50 h | Heating and sintering 450°C × 5 hr | 5.43 | 1.00 | 4.50 | 1.49 | 0.00 | 4.6 | 3.3 |
| Example 8 | Mixer | Ball mill 4 mm-400 rpm × 50 h (dew point -50°C) | Heating and sintering 450°C × 5 hr | 5.49 | 1.00 | 4.38 | 1.02 | 0.63 | 40.0 | 6.6 |
| Example 9 | Mixer | Ball mill 10 mm-400 rpm × 4 h | Heating and sintering 450°C × 5 hr | 5.43 | 1.00 | 4.50 | 1.49 | 0.00 | 3.1 | 1.5 |
| Example 10 | Mixer | Ball mill 10 mm-400 rpm × 4 h | Heating and sintering 450°C × 5 hr | 5.49 | 1.00 | 4.38 | 1.02 | 0.63 | 2.5 | 2.2 |

From the above results, it was found that there was a very good correlation between the area intensity ratio represented by S_{B}/S_{A} in the ³⁵Cl-NMR spectrum and the lithium ion conductivity of the pressure-molded product at a low pressure. For example, in Example 1, even in the case where the content ratio represented by [Cl]/[P] (atomic ratio) was 1.58 and the amount of halogen was relatively large, since S_{B}/S_{A} was 3.5 or more, the lithium ion conductivity of the pressure-molded product at a low pressure exhibited a good value of 5.1 mS/cm. In Examples 3 and 4, in addition to chlorine, bromine is included as a halogen element. Since bromine has a large ionic radius, bromine is less likely to enter the argyrodite crystal structure. Particularly, when bromine enters, chlorine may be less likely to enter the 4d site. However, by passing through a homogeneous intermediate compound, a sulfide solid electrolyte having a high lithium ion conductivity of a pressure-molded product at a low pressure was obtained.

In addition, as compared with the sulfide solid electrolyte of Example 9 obtained by a solid phase method according to the related art, the sulfide solid electrolyte of Example 7, which had the same composition as that in Example 9 but passed through a homogeneous amorphous intermediate compound having a small primary particle diameter, exhibited a large value of S_{B}/S_{A}, and also exhibited a high lithium ion conductivity of a pressure-molded product at a low pressure. In addition, in Examples 10 and 8 in which in addition to chlorine, bromine was included as a halogen element, the same tendency as in Examples 9 and 7 was observed, and in Example 8, by setting the dew point to -50°C under a humidified atmosphere, the mechanochemical reaction was further promoted.

As described above, the sulfide solid electrolyte according to the present embodiment can achieve a high lithium ion conductivity even as a pressure-molded product at a low pressure. This is considered to be due to the fact that the proportion of Cl with a lower valence than S²⁻ or a halogen element including Cl occupying the 4d site surrounded by lithium is high, the interaction with lithium ions decreases, and the lithium ions easily move. In addition, as described above, considering the result of the first principle calculation in which the elastic modulus decreases as the amount of Cl at the 4a site decreases, the elastic modulus decreases as the proportion of Cl or the halogen element including Cl occupying the 4d site increases. As a result, it is considered that a high lithium ion conductivity can be achieved even as a pressure-molded product at a low pressure since the interfacial contact property is good and the grain boundary resistance is small even in molding at a lower pressure.

Although the present invention has been described in detail with reference to specific embodiments, it is apparent to those skilled in the art that various changes and modifications can be made without departing from the spirit and scope of the present invention. The present application is based on a Japanese Patent Application (No. 2021-162226) filed on September 30, 2021, and the contents thereof are incorporated herein by reference.

## Claims

1. A sulfide solid electrolyte to be used for a lithium-ion secondary battery, the sulfide solid electrolyte comprising:
an argyrodite crystal phase comprising Li, P, S, and Ha, wherein
the Ha is one or more halogen elements comprising at least Cl,
a content ratio represented by [Ha]/[P] (atomic ratio) is 1.3 or more, where [P] is a content of the P and [Ha] is a total content of the Ha,
in a ³⁵Cl-NMR spectrum,
an area intensity ratio represented by S_{B}/S_{A} is 3.5 or more, where S_{A} is an area intensity of a peak observed at 0 ppm to 30 ppm and S_{B} is an area intensity of a peak observed at -150 ppm to 0 ppm, or
a peak is observed at -150 ppm to 0 ppm and no peak is observed at 0 ppm to 30 ppm, and
the ³⁵Cl-NMR spectrum is measured under the following conditions:
measurement is made using LiCl as an external standard, a chemical shift position having a highest intensity in an obtained ³⁵Cl-NMR spectrum is set to 9.93 ppm; and a ³⁵Cl-NMR measurement is made to obtain the ³⁵Cl-NMR spectrum under conditions of a probe: a probe for 3.2 mm solid, a measurement condition: a single pulse method, a pulse width: 2.45 µs, an observation center: 20 ppm, an observation width: 1000 ppm, a relaxation delay: 10 sec, a cumulative number: 1024, and a rotation speed: 15 kHz.

2. The sulfide solid electrolyte according to claim 1, wherein the Ha is two or more halogen elements comprising Cl.

3. The sulfide solid electrolyte according to claim 1 or 2, wherein the Ha is two or more halogen elements comprising Cl and Br.

4. The sulfide solid electrolyte according to claim 3, wherein a content ratio represented by [Cl]/[Br] (atomic ratio) is 0.2 to 3.0, where [Cl] is a content of Cl and [Br] is a content of Br.

5. The sulfide solid electrolyte according to any one of claims 1 to 4, wherein when the argyrodite crystal phase is represented by LiₐPS_{b}Ha_{c}, element ratios represented by a, b, and c satisfy relationships of 5 ≤ a ≤ 7, 4 ≤ b ≤ 6, and 1.3 ≤ c ≤ 2.

6. The sulfide solid electrolyte according to any one of claims 1 to 5, wherein a crystal structure of the argyrodite crystal phase comprises an anion,
the anion comprises an oxide anion having an M-O bond in which M and O are bonded, and
the M is at least one element selected from the group consisting of a metal element and a metalloid element in groups 2 to 14 of a periodic table.

7. The sulfide solid electrolyte according to claim 6, wherein a total content of the elements of Li, P, S, Ha, M, and O is 90 mass% or more.

8. A method for producing a sulfide solid electrolyte to be used for a lithium-ion secondary battery, the method comprising:
mixing raw materials comprising Li, P, S, and Ha to obtain a raw material mixture;
heating the raw material mixture to obtain a molten material as a homogeneous intermediate compound; and
cooling the molten material to precipitate an argyrodite crystal, wherein
the Ha is one or more halogen elements comprising at least Cl, and
the sulfide solid electrolyte comprises an argyrodite crystal phase.

9. The method for producing a sulfide solid electrolyte according to claim 8, wherein the heating is performed under an inert atmosphere at 600°C to 800°C for 5 minutes or longer.

10. A method for producing a sulfide solid electrolyte to be used for a lithium-ion secondary battery, the method comprising:
mixing raw materials comprising Li, P, S, and Ha to obtain an amorphous intermediate compound; and
heating and sintering the intermediate compound to precipitate an argyrodite crystal, wherein
the Ha is one or more halogen elements comprising at least Cl, and
the sulfide solid electrolyte comprises an argyrodite crystal phase.

11. The method for producing a sulfide solid electrolyte according to claim 10, wherein a peak derived from the raw materials is not observed in a Raman spectrum of the intermediate compound.

12. The method for producing a sulfide solid electrolyte according to claim 10 or 11, wherein the mixing is performed at a rotation speed of 400 rpm or more for 12 hours or longer in an environment with a dew point of -60°C or higher by a mechanical milling method using a ball mill.

13. The method for producing a sulfide solid electrolyte according to any one of claims 10 to 12, wherein the intermediate compound has a particle diameter of 0.1 µm to 2 µm.
